Europäisches Patentamt

European Patent Office

Office européen des brevets

(19)

(11) EP 0 872 742 B1

(12) **FASCICULE DE BREVET EUROPEEN**

(45) Date de publication et mention
de la délivrance du brevet:
**25.07.2001 Bulletin 2001/30**

(51) Int Cl.⁷: **G01S 15/89**, G01S 7/52

(21) Numéro de dépôt: **98400702.1**

(22) Date de dépôt: **26.03.1998**

(54) **Procédé et dispositif pour le traitement de signaux représentatifs d'ondes réfléchies, transmises ou réfractées par une structure volumique en vue d'effectuer une exploration et une analyse de cette structure**

Verfahren und Vorrichtung zur Verarbeitung von aus einer Volumenstruktur übertragenen oder gebeugten Signalen reflektierter Wellen zur Erkundung oder Analyse der Struktur

Method and system for processing signals representing reflected waves, transmitted or diffracted by a volumetric structure, for the purpose of effecting an investigation and an analysis of this structure

(84) Etats contractants désignés:
**DE ES GB IT**

(30) Priorité: **18.04.1997 FR 9704936**

(43) Date de publication de la demande:
**21.10.1998 Bulletin 1998/43**

(73) Titulaire: **Dory, Jacques**
**77580 Villiers sur Morin (FR)**

(72) Inventeur: **Dory, Jacques**
**77580 Villiers sur Morin (FR)**

(74) Mandataire: **de Saint-Palais, Arnaud Marie et al**
**CABINET MOUTARD**
**35 Rue de la Paroisse**
**BP 513**
**78005 Versailles Cedex (FR)**

(56) Documents cités:
**US-A- 4 012 952          US-A- 4 317 369**
**US-A- 4 817 434          US-A- 4 841 489**

• **M. I. SKOLNIK: "Introduction to Radar Systems" 1981 , MCGRAW-HILL , USA XP002054016 * page 388, alinéa 10.7 - page 392 ***

**Description**

La présente invention concerne un procédé et un dispositif pour le traitement de signaux représentatifs d'ondes réfléchies, transmises ou réfractées par une structure volumique en vue d'effectuer une exploration et une analyse de cette structure.

Elle s'applique notamment, mais non exclusivement, à la réalisation d'appareillages tels que des échographes, des appareils de contrôle non destructifs d'objets, des sonars, ou même des radars.

Les appareillages classiques de ce genre font habituellement intervenir des moyens d'émission qui émettent une onde incidente dans le milieu à examiner et des moyens de réception utilisant éventuellement tout ou partie des moyens d'émission (systèmes homodynes) qui reçoivent les ondes réfléchies par les structures rencontrées par l'onde incidente. Des moyens sont en outre prévus pour transformer pour traiter les signaux reçus par les moyens de réception et les présenter sous une forme exploitable par l'utilisateur, par exemple sous la forme d'une image permettant de localiser la position des obstacles engendrant des réflexions de l'onde incidente.

La méthode la plus couramment utilisée en vue d'obtenir ces résultats consiste à utiliser des ondes impulsionnaires selon un processus consistant à transmettre une impulsion dans une direction donnée (tir), à détecter le retour des échos, à mesurer le temps écoulé entre l'émission et la réception et à en déduire la distance et donc la position de l'obstacle qui a engendré chaque écho. Ce processus de tir se répète ensuite pour différentes directions, selon une loi de balayage prédéterminée.

Une fois le balayage réalisé, il devient possible de réaliser, par exemple sur un système d'affichage classique, des images mettant en évidence les obstacles détectés par les échos, dont on connaît les positions.

De nombreux appareillages de ce genre exploitent une méthode dite "séquentielle" selon laquelle la structure est examinée ligne par ligne au moyen d'un faisceau mobile, la ligne d'exploration étant déplacée entre chaque tir.

Dans ces conditions, la vitesse d'examen croît avec la section du faisceau explorateur et avec la cadence des impulsions. Or, il s'avère que la section du faisceau est limitée par la résolution spatiale exigée, tandis que la cadence est elle-même limitée par le temps nécessaire à tous les échos réfléchis pour revenir sur la sonde.

A titre d'exemple, pour l'examen d'une plaque d'aluminium, où l'on veut détecter des défauts de 1 mm de diamètre, avec une résolution de 3 mm, la section du faisceau ne peut guère dépasser 2 mm, et la cadence, compte tenu du phénomène de réverbération, doit être inférieure à 1000 Hz.

Dans ces conditions, la vitesse d'examen superficielle ne peut dépasser 2 mm x 2 mm x 1000 = 4000 mm$^2$/ seconde soit 4/1000 de m$^2$, soit en une heure 4/1000 x 3600 = 14,4 m$^2$. En sortie de fabrication, cette vitesse s'avère souvent trop faible, car elle freine la production, d'où parfois la nécessité de faire travailler plusieurs installations en parallèle.

Dans de nombreuses autres applications, contrôle de tubes, de rails en voie, etc.., cette limitation est encore plus critique.

Dans le but de supprimer ces inconvénients, on a déjà proposé d'émettre sur l'objet à explorer une onde sensiblement plane, de section relativement importante engendrée par une sonde constituée par un réseau comprenant une pluralité d'organes d'émission/réception de faible dimension de préférence inférieure à une longueur d'onde, de façon à posséder un très large diagramme de rayonnement ; ces organes d'émission étant attaqués simultanément, en parallèle. A la réception, chaque organe d'émission/réception travaille de façon indépendante et reçoit donc séparément les ondes réfléchies par les obstacles interceptant le faisceau qui se trouve dans sa zone de réception. Après numérisation, les informations délivrées par ces organes d'émission (champ d'ondes réfléchies) sont mémorisées dans des mémoires dont la lecture s'effectue en sens inverse de l'écriture.

Les signaux de lecture sont alors appliqués à un dispositif de reconstitution du champ d'ondes réfléchies qui comprend une pluralité d'organes émetteurs répartis selon une structure similaire à celle des organes d'émission/ réception de la susdite sonde. L'application des signaux de lecture à ces organes émetteurs s'effectue en correspondance avec la transmission à la mémoire des signaux d'écriture par les organes d'émission/réception.

Le dispositif de reconstitution a pour but de reproduire dans un milieu auxiliaire le champ d'onde réfléchie afin de reproduire une image de l'objet, avec une résolution qui dépend de la longueur d'onde de l'onde incidente et de la dimension des éléments de la sonde.

Dans le cas où l'onde incidente est une onde ultrasonore, la solution la plus simple consiste à former l'image dans un milieu optiquement transparent et à la visualiser par la méthode de Schlieren.

Toutefois, cette méthode se prête mal à une exploitation industrielle. En outre, elle n'est pas linéaire et ne permet pas de restituer les composantes haute-fréquence.

Selon un autre procédé, l'image est recueillie sur une troisième sonde et la fréquence de lecture est modulée de façon à ce que l'image d'une structure soit toujours "au point" lorsque les signaux correspondants arrivent sur cette sonde.

Il s'avère que ce système est complexe et exige des sondes à très large bande. Par ailleurs, le passage dans trois sondes successives entraîne une dégradation du signal. En outre, des difficultés supplémentaires apparaissent lorsque l'onde d'émission est inclinée ou circulaire.

Par le brevet US-A-4 841 489, on connaît un procédé d'analyse purement séquentiel faisant intervenir un balayage de l'objet à analyser par une sonde à un seul élément de détection. Il s'avère que ce procédé est beaucoup trop lent, notamment pour effectuer un contrôle de pièces dans une chaîne de fabrication.

Par ailleurs, le brevet US-A-4 817 434 décrit un dispositif comprenant un générateur d'adresse par élément récepteur de la sonde, ce générateur fournissant l'adresse à lire dans la mémoire de champ correspondant à l'élément récepteur pour obtenir le signal correspondant au point image à reconstituer. Le point image est obtenu en combinant les signaux lus dans les mémoires de champ respectives des éléments de détection, aux adresses indiquées par le générateur d'adresses, correspondant au point image à reconstituer. Ce dispositif ne permet qu'une cadence de constitution d'image relativement faible.

L'invention a donc plus particulièrement pour but de supprimer ces inconvénients.

A cet effet, elle se base sur la constatation que, dans un processus tel que celui précédemment décrit, chaque point de l'objet à explorer donne naissance à une onde qui se trouve mémorisée à des adresses d'une mémoire de champ réparties sous la forme d'un arc d'hyperbole dont les caractéristiques dépendent de la position du point par rapport à la sonde et du diagramme de rayonnement de chaque élément (cette hyperbole se réduisant théoriquement aux deux asymptotes pour les points situés contre la sonde).

Dans le cas où un relais liquide est interposé entre la sonde et la pièce à contrôler (contrôle par immersion), les ondes mémorisées sont réparties sur des courbes qui ne sont pas forcément des hyperboles, car le trajet des ondes est plus complexe du fait de la réfraction entre les différents milieux de propagation. Un phénomène analogue se produit lorsque le matériau sondé n'est pas homogène en ce qui concerne la vitesse de propagation. Dans tout ce qui suit, le terme d'hyperbole désignera donc d'une façon générale, l'ensemble de ces courbes.

En conséquence, le procédé selon l'invention comprend les étapes suivantes :

- l'émission d'au moins une onde incidente dans ladite structure,

- la réception des ondes provenant de la structure rencontrée par l'onde incidente à l'intérieur du milieu, par une pluralité d'éléments de détection indépendants les uns des autres,

- la mémorisation après numérisation des informations délivrées par les éléments de détection dans une mémoire de champ comprenant une ligne respective par élément de détection, et

- la reconstitution et/ou l'analyse de la structure du milieu à partir des informations lues dans la mémoire de champ, dans laquelle sont calculées pour chaque point de l'objet, les positions de la mémoire de champ contenant les signaux détectés par les éléments de détection, correspondant aux ondes réfléchies ou transmises par ce point, ces positions étant calculées à l'aide d'une loi d'adressage dont les paramètres dépendent de la position de ce point par rapport aux éléments de détection, et dans laquelle pour chaque point, les lignes de la mémoire de champ sont lues aux positions respectives calculées pour ce point, et une opération mathématique étant appliquée aux valeurs lues pour ce point en vue d'obtenir un résultat représentatif de l'importance de l'onde provenant de ce point, ce résultat étant ensuite traité ou mémorisé dans une mémoire spécifique.

Selon ce procédé, les positions de la mémoire de champ à lire pour chaque point sont calculées au préalable et stockées dans une mémoire d'adressage, et lors du calcul de la valeur pour chaque point, toutes les lignes de la mémoire de champ sont lues en parallèle pour chaque point aux positions indiquées simultanément pour ce point par la mémoire d'adressage.

Conformément à l'invention, ce procédé est caractérisé en ce que la valeur est obtenue en multipliant le résultat de l'opération mathématique par un facteur de correction K variant en fonction du rapport du nombre de valeurs supérieures à un seuil prédéfini, lues dans la mémoire de champ pour un point, et du nombre total de valeurs lues pour ce point.

Ainsi le procédé selon l'invention consiste à calculer pour chaque point de l'objet à explorer les adresses de lecture de la mémoire de champ où sont mémorisées les informations concernant l'onde renvoyée par ce point, ces adresses étant réparties dans la mémoire de champ suivant une loi de répartition hyperbolique dépendant de la position du point par rapport à la sonde, et, d'autre part, à relire la mémoire de champ suivant chaque loi de répartition pour obtenir les informations concernant l'onde renvoyée par le point correspondant de l'objet, et à faire correspondre à ce point le résultat d'un calcul effectué sur ces informations.

Ensuite, toutes les lignes de la mémoire de champ, c'est-à-dire les zones contenant les informations relatives aux signaux transmis respectivement par les organes de réception, sont relues en parallèle et les valeurs sont soumises à une opération mathématique, par exemple une addition (soit directement sous forme numérique, soit sous forme analogique, après conversion numérique/analogique) pour donner naissance à une valeur Vp. Si le signal a subi une amplification logarithmique, cette addition correspond à une multiplication originelle du signal. La valeur Vp est introduite dans une mémoire image comprenant une pluralité de points, à chacun desquels correspond une loi de lecture de la mémoire de champ, par exemple hyperbolique, dont les paramètres dépendent des coordonnées de ce point.

Compte tenu du fait que le calcul de la loi de lecture pour obtenir chaque point est trop long pour être effectué en temps réel, ce calcul est effectué au préalable et les résultats de ce calcul sont stockés dans des mémoires d'adresses, associées à chaque ligne de la mémoire de champ.

Le processus de lecture se déroule alors de la façon suivante :

Pour chaque point de la mémoire image, les coordonnées de ce point sont transmises en parallèle à toutes les mémoires d'adresse. Ces dernières fournissent immédiatement, en parallèle, les adresses de chaque ligne de la mémoire de champ permettant de générer la loi (par exemple l'hyperbole) de lecture correspondante. La valeur Vp correspondante est alors mémorisée dans la mémoire image à l'adresse dudit point.

Ce procédé permet d'obtenir rapidement une image de qualité lorsque les adresses de la mémoire de champ correspondant à un point de la structure à analyser sont lues en parallèle.

Toutefois, lorsque le nombre de points de la structure susceptibles de renvoyer une onde est très supérieur au nombre d'éléments de détection, il apparaît des artefacts au niveau de l'image produite car le champ renvoyé par la structure est alors sous-échantillonné.

En principe, une impulsion ultrasonore comporte toujours plusieurs oscillations, et le signal devient alternativement positif et négatif, de sorte que la composante continue est nulle. Dans ces conditions, on peut montrer facilement que si les adresses de lecture de la mémoire champ correspondant à un point de la structure analysée ne coïncident pas exactement à la répartition hyperbolique des adresses contenant effectivement les signaux correspondant aux ondes retransmises par ce point, ces adresses de lecture contiennent successivement des informations positives et négatives dont la somme est nulle. Mais ceci n'est rigoureusement vrai que si les conditions suivantes sont remplies :

1. les éléments de détection sont suffisamment nombreux et rapprochés (échantillonnage spatial), et

2. la fréquence d'échantillonnage est élevée par rapport à la fréquence des ultrasons, de manière à obtenir un nombre de niveau d'échantillonnage élevé (échantillonnage temporel).

Dans le cas contraire, une valeur non nulle peut être obtenue pour des points d'une zone vide de la structure analysée.

La solution qui consiste à augmenter et rapprocher les éléments de détection conduit à un dispositif volumineux et coûteux qui exclut l'utilisation de sondes matricielles qui exigeraient alors un nombre considérable d'éléments de détection et donc des mémoires de grande capacité.

Pour supprimer cet inconvénient, l'invention propose d'appliquer un facteur de correction au résultat du calcul effectué sur les informations lues dans la mémoire de champ selon la loi de répartition correspondant à l'onde renvoyée par chaque point de l'objet.

Avantageusement, ce facteur de pondération varie en fonction du rapport du nombre de valeurs non nulles lues dans la mémoire de champ et du nombre maximum théorique de ces valeurs non nulles.

Par ailleurs, pour conserver une bonne résolution, chaque élément de détection doit avoir un diagramme de rayonnement très ouvert, ce qui implique en général que les éléments doivent présenter une dimension réduite, de préférence inférieure à une longueur d'onde. Mais si le nombre d'éléments est réduit, la surface totale de réception, l'est également, d'où une perte de sensibilité qui peut être incompatible avec l'analyse à effectuer.

Selon la présente invention, les éléments de détection peuvent avoir une dimension supérieure à la longueur d'onde et sont chacun munis d'un moyen pour augmenter leur angle d'ouverture, ces moyens pouvant consister en une lentille miniature ou en une calotte sphérique.

Un mode de réalisation du dispositif selon l'invention sera décrit ci-après, à titre d'exemple non limitatif, avec référence aux dessins annexés dans lesquels :

La figure 1 est un schéma théorique d'un dispositif d'exploration et d'analyse d'une structure volumique ;

La figure 2 est une représentation schématique illustrant le principe de fonctionnement du dispositif représenté figure 1 ;

La figure 3 représente schématiquement la mémoire de champ et la répartition hyperbolique dans cette mémoire des échos reçus par les éléments de détection ;

La figure 4 illustre une variante du dispositif représenté sur la figure 1; La figure 5 représente des exemples de courbes donnant la valeur du facteur de correction pouvant être appliqué aux valeurs obtenues par le procédé selon l'invention, en fonction du rapport des nombres réel et théorique de détecteurs recevant un écho en provenance d'un point donné ;

La figure 6 illustre un exemple de répartition dans le temps d'échos émis et reçus par un élément de détection en provenance de deux points situés à des distances différentes de la sonde ;

La figure 7 montre la répartition dans la mémoire des échos retournés par les deux points représentés sur la figure 6 ;

Les figures 8a et 8b représentent schématiquement la sonde et le diagramme de rayonnement d'un élément de détection, respectivement selon l'art antérieur et selon l'invention ;

La figure 9 représente une sonde matricielle selon l'invention.

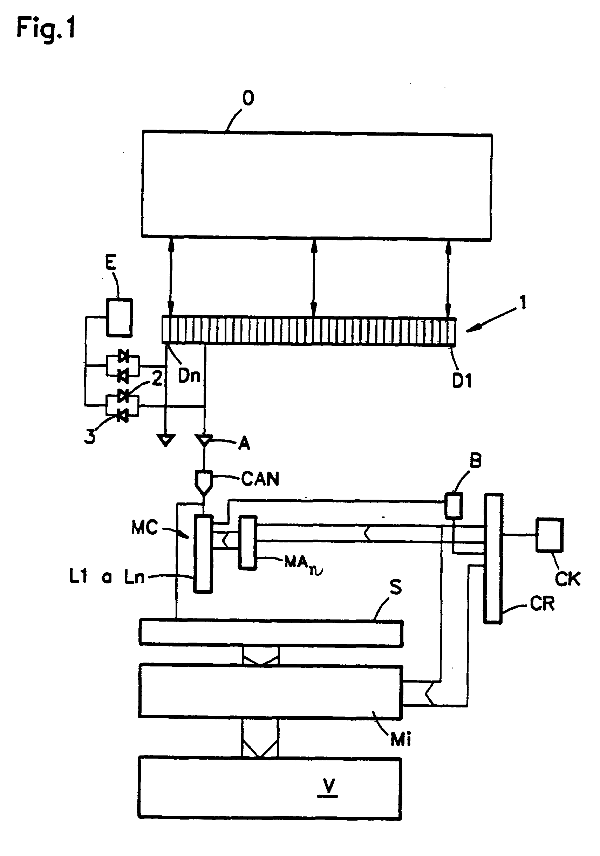

Le dispositif représenté figure 1 est utilisable dans des appareillages à ultrasons travaillant en réflexion d'impulsions, pour le contrôle non destructif des matériaux ou l'imagerie médicale.

Il fait intervenir une sonde 1 constituée par une barrette linéaire composée d'une pluralité d'éléments émetteurs/récepteurs $D_1$ à $D_n$ de faible dimension (1 mm) par exemple au nombre de 128. De ce fait, la même sonde 1 est utilisée à l'émission et à la réception.

Chaque élément $D_1$ à $D_n$ est relié, d'une part, à une zone, ici une ligne $L_1... L_n$ respective d'une mémoire de champ MC, par l'intermédiaire d'un préamplificateur A et d'un convertisseur analogique/numérique CAN et, d'autre part, à un émetteur E, par l'intermédiaire de deux diodes 2, 3 montées tête-bêche, présentant un seuil de conduction par exemple de l'ordre d'une fraction de volt.

Ainsi, lorsque l'émetteur E émet en délivrant une tension pouvant atteindre une centaine de volts alternatifs, les diodes 2, 3 associées à tous les éléments émetteurs/récepteurs $D_1$ à $D_9$ sont largement conductrices et se comportent comme des courts-circuits, de sorte que tous les éléments $D_1$ à $D_9$ sont excités en parallèle par l'émetteur E et produisent donc une onde plane.

Par contre, à la réception, chaque élément $D_1$ à $D_9$ travaille de façon indépendante et attaque le préamplificateur A auquel il se trouve relié. En effet, les signaux détectés par les éléments sont faibles (quelques dizaines de millivolts).

Cette disposition a en outre l'avantage de diminuer le bruit d'entrée en isolant les préamplificateurs A du circuit d'émission.

Chaque préamplificateur A attaque ensuite un convertisseur analogique/numérique CAN correspondant et les signaux numérisés sont stockés dans les lignes $L_1$ à $L_n$, de la mémoire de champ MC à des adresses d'écriture fournies par une mémoire d'adressage MA elle-même adressée par un compteur CR piloté par une horloge CK. Ce compteur CR et cette horloge CK sont communs à la mémoire d'adressage MA et à la mémoire de champ MC.

Lors de l'écriture dans la mémoire de champ MC, les lignes $L_1$ à $L_n$ sont adressées en parallèle directement par le compteur CR. Il est également possible de les adresser indépendamment pour tenir compte, par exemple d'une disposition particulière des éléments de la sonde ou de la forme du faisceau émis.

Avantageusement, le nombre No de positions mémoires utilisées lors de l'opération d'écriture est choisi parmi les puissances de deux soit, par exemple, 512, 1024, etc..

Si, par exemple, No est égal à 512, les positions 0 à 511 de la mémoire de champ sont écrites.

Aussitôt après l'écriture, les mémoires $L_1$ à $L_n$ sont commutées en position lecture, par l'intermédiaire d'une bascule B commandée par le bit 10 du compteur CR.

A partir de l'adresse 512, la mémoire d'adressage MA est adressée par le compteur CR et applique ainsi simultanément les adresses des positions à lire dans les lignes $L_1$ à $L_n$ de la mémoire champ pour déterminer la valeur de chaque point P'ij de l'image à reconstituer. Les adresses contenues dans la mémoire d'adressage MA sont calculées de façon que les positions de mémoire adressées correspondent à une forme prédéterminée (hyperbole de lecture).

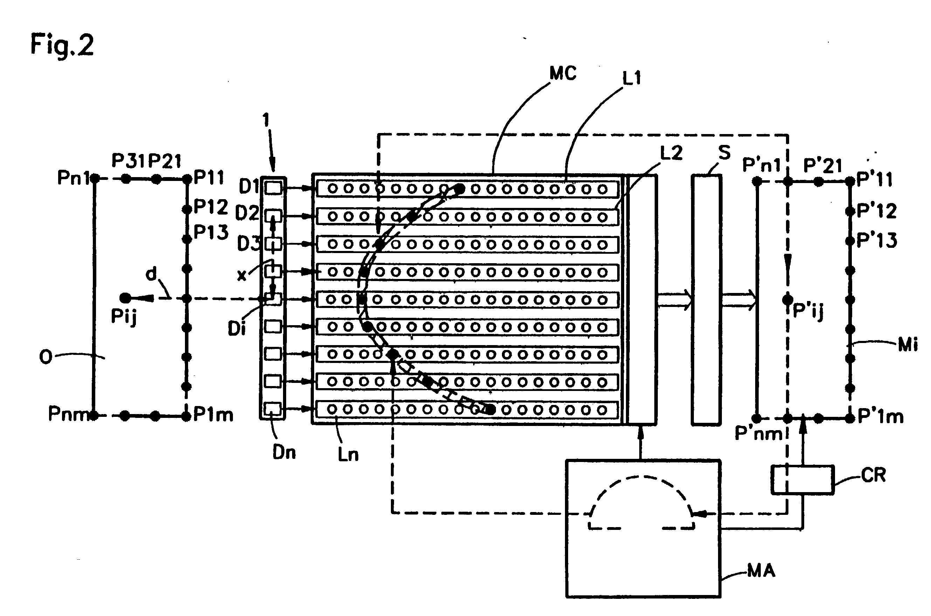

Parallèlement, à partir de l'adresse 512, le compteur CR adresse une position P'ij d'une mémoire Mi (figure 2). A chaque point $P'_{11}$ à $P'_{nm}$ de cette mémoire Mi, on fait correspondre une position $P_{11}$ à $P_{nm}$ de l'objet examiné O, de manière à ce que cette mémoire "image" Mi puisse être exploitée par la suite pour fournir une image de l'objet O.

Pour chacun de ces points, $P'_{11}$ à $P'_{nm}$, on calcule les positions occupées dans les lignes de mémoires de champ $L_1$ à $L_n$ par l'impulsion ultrasonore réfléchie, en tenant compte de la forme du champ émis, de la fréquence de numérisation, de la vitesse du son, de la position de l'objet par rapport à la sonde. Ainsi, pour le point Pij de l'objet qui correspond au point P'ij de la mémoire image Mi, les positions occupées dans la mémoire de champ MC sont disposées selon une hyperbole indiquée par les hachures.

Si la sonde 1 est en contact direct avec l'objet, la numérisation peut commencer en même temps que l'émission. Si l'on travaille avec un relais acoustique, le début de la numérisation peut être différé d'un temps égal au parcours aller et retour dans le relais.

Les valeurs lues dans les différentes mémoires (par exemple les valeurs contenues dans les cellules des lignes de mémoires situées sur l'hyperbole H relative au point Pij) sont additionnées dans un circuit additionneur S et envoyées à la position sélectionnée de la mémoire Mi (par exemple la position P'ij).

Ainsi, le circuit de la figure 1 applique les relations suivantes :

$$P'ij = \sum_{k=1}^{n} A_{k,l} \quad \text{avec } l = f_{i,j}(k) \qquad (1)$$

$A_{k,l}$ étant la valeur de l'échantillon stocké à la position 1 de la ligne $L_k$ de la mémoire de champ MC, et

$f_{i,j}(k)$ donnant les positions des échantillons dans les lignes $L_1$ à $L_n$ de la mémoire de champ, situés sur l'hyperbole correspondant au point Pij.

Comme précédemment mentionné, les informations contenues dans la mémoire Mi peuvent être exploitées de différentes manières.

Elles peuvent servir à former une image sur un écran de visualisation V de type classique.

Ces informations peuvent être également traitées, par exemple, par des circuits logiques permettant d'identifier et d'enregistrer la nature des défauts détectés dans le cas d'un contrôle non destructif.

La mémoire d'adressage MA peut être de type mémoire morte (ROM, PROM) programmée une fois pour toutes. Toutefois, il est préférable, tant en ce qui concerne la vitesse que la souplesse d'exploitation, d'utiliser une mémoire reprogrammable une fois en place, par exemple de type EPROM ou RAM.

La programmation peut se faire alors au moment de la mise en route. Le calcul préalable peut être effectué par un mini-ordinateur en fonction des conditions d'examen et du modèle de sonde utilisé. Les données peuvent aussi être précalculées et stockées sur disques ou sur PROM. Les résultats sont ensuite transférés séquentiellement dans la mémoire MA par un procédé classique. Ce transfert peut être très rapide (quelques secondes).

Un mode de calcul des adresses dans la mémoire d'adressage MA sera décrit ci-après en regard de la figure 2.

Soit le point Pij situé à une distance d de la sonde à l'aplomb de l'élément de détection Di, on fait correspondre à ce point Pij une position P'ij de la mémoire image Mi, donc une adresse fournie par le compteur CR.

Soit x la distance séparant l'élément considéré de la sonde 1, par exemple $D_2$, et l'élément Di à l'aplomb du point Pij, et c la vitesse du son dans le milieu objet.

Si l'on suppose que l'onde émise par la sonde 1 est plane et se propage perpendiculairement à la surface de la sonde 1, le temps t(x) mis par une impulsion pour parvenir à l'élément de détection $D_2$ après réflexion sur le point Pij est égal au temps mis par l'onde émise pour atteindre Pij, soit d/c + le temps mis par l'onde entre Pij et l'élément D2, soit (racine carrée de $(x^2 + d^2))/c$ :

$$t(x) = \frac{d + \sqrt{x^2 + d^2}}{c} \qquad (2)$$

Si la fréquence d'écriture est désignée par f et si l'écriture démarre en même temps que l'émission, le signal réfléchi va être stocké dans la cellule de la mémoire de champ MC située à l'abscisse x, à la position f. t(x).

C'est la valeur f. t(x) qui va être introduite dans la mémoire MA pour être utilisée lors de l'opération de lecture.

Si l'onde ne se propage pas perpendiculairement à la sonde (sondage sous incidence inclinée) ou si l'onde n'est pas plane (onde circulaire dans le cas d'un sondage sectoriel) le calcul se fait de façon très similaire, seul change le temps mis par l'onde pour atteindre un point Pij. Ce temps ne dépend plus seulement de d mais aussi de la position latérale du point Pij par rapport à la sonde 1. Si l'onde est inclinée, le temps varie linéairement en fonction de la position latérale Xp, le temps mis par l'onde émise pour atteindre le point Pij étant égal à :

$$\frac{d \cdot \cos\theta + Xp \cdot \sin\theta}{c} \qquad (3)$$

θ étant l'angle du faisceau émis par rapport à la normale à la sonde 1.

Dans le cas où les ondes engendrées par la sonde 1 sont entretenues ou semi-entretenues et où ces ondes ont la forme d'un train d'ondes d'une durée suffisante pour couvrir tout l'objet, chaque point donne naissance à une onde réfléchie de durée telle qu'elle va être mémorisée dans presque toutes les positions des lignes de mémoires MC, et les informations correspondant à des points différents vont se superposer.

On peut considérer alors qu'une "tranche" de ces mémoires contiendra toutes les informations correspondant à l'objet, à partir du moment où cette tranche aura une "épaisseur" suffisante pour contenir la plus grande des hyperboles.

La lecture de cette unique tranche sera donc en principe suffisante pour recréer l'image de l'objet.

Cette lecture pourra se faire en modifiant progressivement la forme des hyperboles de lecture, ou en "mettant au point" sur une zone située à une distance donnée.

La numérisation du signal devra alors se faire sur un nombre de niveaux plus élevés, pour permettre une bonne discrimination des différentes informations.

On peut aussi envisager, pour simplifier l'électronique, d'adresser séquentiellement les mémoires MC lors de l'écriture, la relecture se faisant toujours en parallèle (un seul préamplificateur et un seul convertisseur analogique/ numérique sont alors nécessaires).

La vitesse d'acquisition est alors notablement diminuée, mais la résolution reste élevée. Cette solution peut être intéressante lorsque la recherche de la vitesse n'est pas une priorité. Des solutions mixtes peuvent aussi être envisagées : écriture parallèle sur des groupes de mémoires, ces groupes étant adressés séquentiellement.

Dans l'exemple précédemment décrit, le signal ultrasonore est mémorisé avant détection, donc au niveau haute fréquence. La fréquence d'échantillonnage doit être au moins égale à trois fois la fréquence ultrasonore soit, par exemple, de 10 MHz pour une onde ultrasonore de 3 MHz.

Ainsi, dans le cas où l'on désire sonder une profondeur de 20 cm dans l'acier, le temps de parcours aller et retour maximum est égal à environ 60 µs à une vitesse de 6 mm/µs, soit 600 points échantillonnés sur chaque ligne.

Pour une image de 100 lignes, il faudra donc calculer 600 x 100 = 60.000 points. Le calcul se réduit ici à une simple lecture de mémoire suivi d'une addition.

Cette opération peut être réalisée, avec des circuits modernes, en 1/100 de microseconde. La totalité de l'image sera donc calculée en 60.000/100 = 600 microsecondes.

La mémorisation du champ aura duré 60 microsecondes, et le temps total d'acquisition d'une image sera donc égal à 660 microsecondes, la cadence image pourra être supérieure à 1000 Hz.

Si cette cadence s'avère insuffisante, elle peut être augmentée de plusieurs manières :

a) Partage de la mémoire champ en plusieurs sous/mémoires lues en parallèles.

b) Sélection et traitement de la seule zone mémoire contenant les informations utiles.

Il est à noter que l'onde ultrasonore a souvent la forme d'une impulsion brève comprenant plusieurs alternances. Il peut alors être intéressant d'utiliser plusieurs hyperboles de lecture interceptant ces alternances. Si l'impulsion est courte et ne comporte qu'une alternance complète, une hyperbole pourra être utilisée pour relire l'alternance positive et à une distance correspondant à une demi période pour relire la négative. Si Pp et Pm sont les valeurs obtenues après ces relectures, la valeur P = Pp - Pm sera enregistrée. Cette solution peut améliorer le rapport signal/bruit et la résolution du système. Les deux lectures peuvent se faire successivement, au détriment de la vitesse, ou en parallèle, en utilisant deux groupes de mémoires.

Le procédé selon l'invention présente de nombreux avantages vis-à-vis des procédés séquentiels.

<u>Vitesse</u> : Une surface importante est explorée à chaque tir, par exemple 100 x 5 mm, au lieu de 3 x 3 mm dans le procédé séquentiel.

La vitesse d'examen peut être multipliée par 50 ou 100 par rapport au procédé séquentiel, ce qui est considérable.

La rapidité du système ouvre la voie à de nombreuses applications, par exemple l'imagerie tridimensionnelle et l'imagerie Doppler.

L'imagerie tridimensionnelle peut s'obtenir aisément si l'on utilise une sonde matricielle, mais l'électronique est très lourde, car le nombre d'éléments d'une sonde matricielle classique est élevé. Cependant, il est possible de réduire sensiblement le nombre d'éléments en utilisant une répartition aléatoire de ces derniers sur la surface de la sonde, ce qui autorise un espacement plus grand des éléments sans que les lobes parasites deviennent trop importants. Avec une sonde linéaire, une série de plans peut être rapidement enregistrée en déplaçant le plan de -coupe entre chaque tir. A une cadence de 100 Hz, 1000 plans de coupe peuvent être mémorisés en 1/10 seconde. Les mémoires peuvent être ensuite exploitées pour obtenir une vue tridimensionnelle, ou une vue en coupe dans un plan quelconque.

En ce qui concerne l'imagerie Doppler, l'application à l'imagerie Doppler résulte du fait que des images successives peuvent être comparées. Le signal haute fréquence étant mémorisé, des différences très faibles entre deux images peuvent être décelées (par soustraction, par exemple) et mises en évidence.

<u>résolution:</u> Le système travaille avec une très grande ouverture numérique. Pratiquement, la résolution spatiale n'est limitée que par la plus grande des deux valeurs : longueur d'onde - dimension d'un élément. Ainsi, dans l'exemple cité, la plus grande de ces deux valeurs est la longueur d'onde, soit 2 mm. Avec une fréquence de 10 MHz, la plus grande des deux valeurs serait la dimension d'un élément, soit ici 1 mm.

Reproductibilité : La sensibilité du système varie très peu en fonction de la position d'un obstacle sous la sonde, puis le champ est émis sous forme d'une onde plane. De plus, les variations de sensibilité en fonction de la position peuvent être calculées, et donc corrigées, puisque l'on connaît la position exacte de chaque obstacle par rapport à la sonde.

Le système peut fonctionner avec des fronts d'ondes d'émission de forme quelconque (plans, plans inclinés, cylindriques). Il suffit de calculer dans chaque cas la forme des hyperboles de lecture en fonction de leur position.

Il s'avère toutefois que lorsque le nombre de points réfléchissants dans l'objet O est très supérieur au nombre d'éléments de détection Di, et donc au nombre de lignes Li dans la mémoire de champ MC, des artefacts peuvent apparaître, car le champ réfléchi est alors sous-échantillonné, et une valeur non nulle peut être obtenue en des points correspondant à des zones vides de l'objet O.

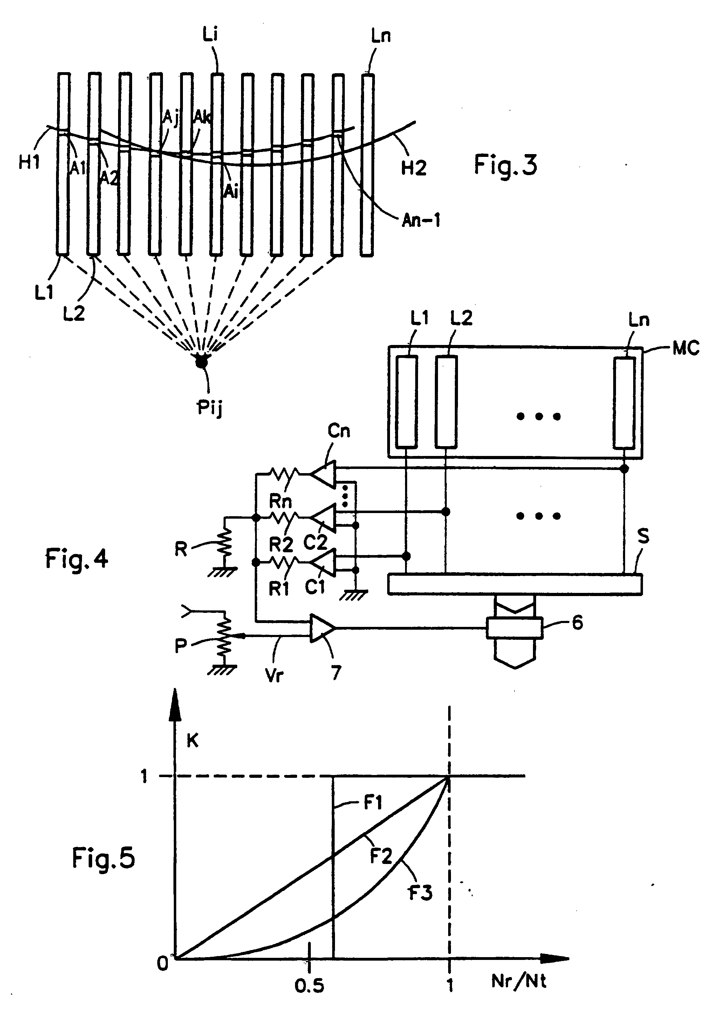

Ainsi, comme montré sur la figure 3, le point Pij de l'objet O renvoie une onde hyperbolique que l'on retrouve aux emplacements Ai (i variant de 1 à n-1) dans les différentes lignes Li de la mémoire de champ MC. Si l'hyperbole de lecture H1 coïncide avec l'hyperbole écrite Ai dans la mémoire de champ, la valeur du point image correspondant qui est égale à la somme des valeurs lues dans cette mémoire est maximum.

Si l'on considère maintenant un point de l'objet O qui ne renvoie pas d'onde parce qu'il est situé dans une zone vide, l'hyperbole de lecture correspondante peut intercepter des valeurs d'une autre hyperbole de lecture correspondant à une onde renvoyée par un point de l'objet. Ainsi, sur la figure 3, l'hyperbole H2 intercepte l'hyperbole H1 au niveau des points Aj et Ak. La valeur qui est calculée pour le point d'une zone vide de l'objet, correspondant à l'hyperbole H2 n'est donc pas nulle. On obtient donc dans la mémoire image Mi des points parasites de faible amplitude qui dégradent la qualité de l'image ainsi formée.

Pour supprimer cet inconvénient, il est possible de multiplier et de rapprocher les uns des autres les éléments récepteurs de la sonde 1, et d'augmenter la fréquence d'échantillonnage. Toutefois, cette solution devient alors extrêmement coûteuse, et rend irréaliste l'usage de sondes matricielles.

Selon l'invention, il suffit d'appliquer un facteur de correction à la valeur obtenue en sortie du circuit additionneur S, ce facteur de correction variant en fonction d'un facteur de cohérence égal au rapport du nombre Nr de valeurs non nulles lues dans les lignes Li de la mémoire de champ MC interceptées par l'hyperbole de lecture correspondante et du nombre maximum théorique Nt qui correspond au nombre de cases mémoires de la mémoire de champ interceptées par l'hyperbole de lecture. Théoriquement ce facteur de cohérence vaut 1. Cependant, en pratique, certains obstacles de faible dimension ou ayant une position particulière peuvent renvoyer des ondes plus faibles, et donc le facteur de cohérence peut être inférieur à 1.

La figure 4 montre une variante du circuit représenté sur la figure 1 qui permet de mettre en oeuvre ce principe. Sur cette figure, des comparateurs C1, C2, Cn sont connectés respectivement aux bus de liaison entre les lignes Li de la mémoire de champ et le circuit additionneur S pour déterminer si les valeurs lues sont nulles ou non. On peut à cet effet négliger un ou plusieurs bits de poids faible des valeurs lues. Les sorties des comparateurs sont appliquées à un sommateur analogique à résistances R1, R2, Rn. La tension de sortie du sommateur est ainsi proportionnelle au nombre Nr de lignes Li de la mémoire de champ MC contenant une information non nulle, ou non voisine de zéro. Cette tension de sortie est appliquée à l'entrée d'un autre comparateur 7 dont l'autre entrée est connectée à une source de tension de référence Vr réglable par un potentiomètre P. La sortie de ce comparateur 7 commande une porte 6 qui valide ou non la sortie du circuit additionneur S vers le circuit utilisateur, par exemple la mémoire image Mi montrée sur la figure 1. De cette manière, lorsque la tension de sortie du sommateur à résistances dépasse la tension de référence Vr, le comparateur 7 fournit une tension qui débloque la porte 6.

La tension de référence Vr peut varier en fonction de la position du point correspondant de l'objet O par rapport à la sonde 1. Il est donc avantageux de faire varier cette tension, par exemple par programmation, en fonction de la position du point en cours d'analyse. Ainsi, cette tension peut varier en fonction du nombre maximum théorique Nt de lignes Li de la mémoire de champ devant contenir une valeur non nulle pour chaque point de l'objet O.
En pratique, une valeur de tension de référence Vr choisie égale à 0,6 à 0,8 fois Nt constitue un bon compromis.

A titre de variante, le dispositif à seuil tout ou rien constitué par le comparateur 7 et la porte 6 peut être remplacé par un dispositif qui applique une correction plus progressive à la sortie du circuit additionneur S en fonction du rapport Nr/Nt.

La figure 5 montre plusieurs courbes possibles donnant la valeur du facteur de correction K à appliquer en fonction du rapport Nr/Nt. La courbe F1 correspond au circuit représenté sur la figure 4. La courbe F2 illustre le cas où le facteur de correction K est proportionnel au rapport Nr/Nt, et la courbe F3, le cas où ce facteur K varie d'une manière exponentielle en fonction du rapport Nr/Nt.
Pour obtenir de telles corrections, il suffit de remplacer le comparateur 7 et la porte 6 par un circuit à fonction de transfert prenant en compte les valeurs Nr et Nt.

Bien entendu le circuit analogique qui vient d'être décrit peut être remplacé par un circuit entièrement numérique.

Il est à noter que la vitesse d'acquisition dépend de la cadence des impulsions de sondage qui sont émises par la sonde 1 dans la direction de l'objet O à analyser, cette cadence étant elle-même limitée par le temps d'aller et de retour des ondes émises et renvoyées par les obstacles les plus lointains de l'objet O.

Ainsi, dans le cas de sondages marins visant à détecter des objets à grande distance - plusieurs kilomètres, ce temps d'aller et de retour peut atteindre plusieurs secondes.

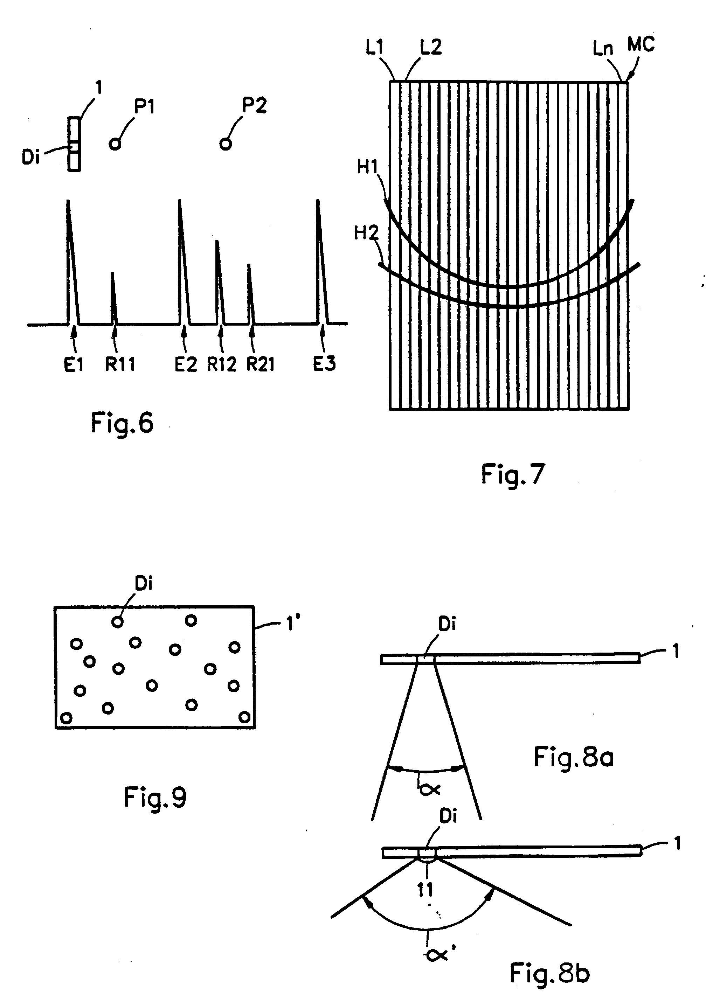

Les figures 6 et 7 illustrent ce phénomène. Sur la figure 6, on a représenté la sonde 1 comportant les éléments de réception Di, qui émet en direction d'un objet comprenant notamment deux points P1 et P2 qui renvoient un écho en direction de la sonde 1. En correspondance avec ces éléments, est montrée la courbe en fonction du temps des impulsions émises et reçues par l'élément Di la sonde 1. A l'impulsion émise EI correspond les impulsions reçues R11 et R12 retournées respectivement par les points P1 et P2. Si l'impulsion suivante E2 est émise par la sonde avant que l'impulsion R12 retournée par le point P2 soit reçue par la sonde, cette impulsion P12 va se mélanger avec les impulsions, par exemple R21, retournées par l'objet, en particulier par le point P1, à la suite de l'impulsion E2.

Il faut donc attendre que les ondes retournées par tous les points de l'objet soient revenues avant d'émettre l'impulsion suivante, sinon les échos provenant de plusieurs impulsions successives risquent de se mélanger au niveau des éléments de réception Di.

En fait, la solution décrite permet de s'affranchir de ce phénomène. En effet, comme cela a été expliqué ci-avant, chaque point réémetteur de l'objet à analyser retourne une onde en forme d'hyperbole que l'on retrouve dans la mémoire de champ MC.

La figure 7 représente les lignes Li de la mémoire de champ MC sur laquelle on a superposé les ondes hyperboliques H1 et H2 respectivement renvoyées par les points P1 et P2 et correspondant respectivement aux impulsions R21 et R12 de la figure 6. On remarque que ces hyperboles ont une courbure très différente. La présente invention exploite ce phénomène pour multiplier la cadence d'émission, sachant qu'à chaque point de l'objet O à analyser correspond une hyperbole de lecture unique de la mémoire de champ, quel que soit la position du point dans l'objet.

Cette disposition est particulièrement intéressante lorsque les temps de parcours des ondes sont importants, et le nombre d'échos reçus limité, ce qui est le cas par exemple du sondage sous-marin.

Bien entendu, dans le cas d'une sonde matricielle, les adresses de la mémoire de champ contenant les valeurs reçues par les éléments de détection de l'onde retournée par un point de l'objet sont réparties sur une surface hyperbolique de révolution.

Le dispositif selon l'invention permet ainsi d'effectuer l'analyse volumique de structures à une cadence d'acquisition élevée.

Pour améliorer encore cette solution, il est à noter que pour conserver une bonne résolution, chaque élément doit avoir un diagramme de rayonnement très ouvert, ce qui implique généralement une dimension très réduite des éléments de détection Di de la sonde 1, cette dimension étant de préférence inférieure à la longueur d'onde. Mais si le nombre d'éléments est réduit, la surface totale de réception de la sonde 1 l'est également, d'où une perte de sensibilité qui peut être très gênante. Pour supprimer cet inconvénient, l'invention propose d'utiliser des éléments de détection de dimension supérieure à la longueur d'onde, et de leur associer des lentilles miniatures ou des éléments en forme de calotte sphérique pour augmenter l'angle d'ouverture des éléments, sans modifier leur dimension et leur sensibilité.

Ainsi, comme représenté sur la figure 8a, les éléments de détection Di ont généralement un angle d'ouverture $\alpha$ inférieur à 20°. Si on leur ajoute une lentille ou une calotte sphérique 11, comme représenté sur la figure 8b, cet angle d'ouverture $\alpha'$ peut être augmenté de façon importante (supérieur à 120°).

Cette solution rend possible la réalisation de sondes matricielles présentant un coût raisonnable. La figure 9 montre un exemple de réalisation d'une telle sonde selon l'invention, cette sonde 1' présentant une surface d'émission de forme rectangulaire, et des éléments d'émission et de détection Di en nombre limité, répartis d'une manière aléatoire sur la surface d'émission.

Par ailleurs, si l'on veut couvrir un secteur étendu (par exemple 60°) avec une résolution acceptable et une sensibilité de détection suffisante, il faudrait émettre dans tout ce secteur avec une puissance d'émission élevée. La solution consiste alors à effectuer un balayage avec émission de tirs successifs. Toutefois, dans le cas du sondage marin à grande distance, cela conduit à un temps d'acquisition du balayage très long, ce qui constitue un grave handicap lorsque l'on cherche à détecter des cibles à déplacement rapide.

Or, les sondes à grande portée actuelles utilisent des matrices de transducteurs ultrasonores pour émettre un faisceau étroit et réaliser le déplacement angulaire de ce faisceau en agissant sur les déphasages entre les différents éléments de la sonde.

La solution selon l'invention consiste à effectuer des émissions successives d'un faisceau étroit et de modifier l'orientation du faisceau entre chaque émission de manière à couvrir tout le secteur souhaité.

Lors de la réception, tous les signaux détectés respectivement par les éléments de la sonde sont numérisés et stockés de la manière décrite précédemment dans des lignes respectives de la mémoire de champ.

Comme la distance de sondage est très grande par rapport aux dimensions de la sonde, les informations correspondant à un obstacle sont réparties dans la mémoire de champ le long d'arcs d'hyperboles qui peuvent être assimilés à des droites.

Il est à noter par ailleurs que l'inclinaison de ces droites dépend de l'orientation du faisceau émis avec lequel l'obstacle correspondant est détecté. Il est donc possible d'identifier avec précision, lors de la relecture de la mémoire de champ, la direction dans laquelle un obstacle a été détecté.

Les sondes classiques sont directives aussi bien en émission qu'en réception. Avec de telles sondes, il est donc nécessaire d'attendre que tous les échos de l'impulsion émise dans une direction soient revenus, avant de changer la direction de la sonde. Par contre, la sonde décrite précédemment émet un faisceau étroit, mais peut recueillir des échos dans un angle très ouvert. Dans ces conditions, on peut répéter les émissions à une cadence élevée, indépendante du temps aller et retour des impulsions.

Prenons l'exemple d'un sonar à portée kilométrique travaillant à une fréquence de 100 kHz, ayant une sonde de 3 m de large et de 50 cm de hauteur et comportant 200 éléments transducteurs. Une telle sonde émet un faisceau de 1/200 radians, soit 0,6° dans le plan horizontal et de 3,6° dans le plan vertical. On peut, comme précédemment indiqué, disposer des lentilles acoustiques devant chaque élément pour augmenter leur divergence.

A l'aide d'un tel sonar, le faisceau émis peut être orienté sous un angle variant de -$\Delta\theta$ à +$\Delta\theta°$, par rapport à un axe perpendiculaire à la sonde, par déphasage électronique des signaux émis par les éléments de la sonde. Si, après chaque émission de 1 ms, l'orientation du faisceau est modifiée de 0,5°, soit une vitesse de balayage $V_b$ = 0,5 °/ms, on peut effectuer un balayage complet du secteur à explorer en 180 ms, lorsque $\Delta\theta$ vaut par exemple 45°.

Il est toutefois nécessaire d'attendre que tous les échos soient reçus avant d'effectuer un nouveau balayage. Ainsi, pour une portée d = 1 km en milieu marin, ce temps d'attente t vaut au maximum $2 \times d / V_t$, $V_t$ étant la vitesse de propagation du son en milieu marin et valant 1500 m/s, soit 1,33 s. Avec une marge de sécurité, il est donc possible d'effectuer un balayage toutes les 2 s.

Supposons que deux obstacles aient été détectés, le premier à une distance r1 = 600 m sous un angle de $\theta$1 = -40° et le second à une distance r2 = 500 m sous un angle $\theta$2 = +40°. Par rapport à une origine des temps correspondant au début du balayage, le premier obstacle aura été frappé par une impulsion émise à l'instant t1 = ($\theta$1 + $\Delta\theta$) / $V_b$ = 10 ms, tandis que le second obstacle a été frappé par une impulsion émise à l'instant t2 = ($\theta$2 + $\Delta\theta$) / $V_b$ = 170 ms.

Les temps mis par l'impulsion réfléchie pour atteindre le centre de la sonde sont égaux respectivement à $2 \times r1 / V_t$= 0,8 s et $2 \times r2 / V_t$= 0,666 s. On obtient donc des instants d'arrivée

$$t'1 = \frac{(\theta1 + \Delta\theta)}{V_b} + 2 \times \frac{r1}{V_t} = 0,81 \text{ s}, \tag{4}$$

et

$$t'2 = \frac{(\theta2 + \Delta\theta)}{V_b} + 2 \times \frac{r2}{V_t} = 0,83 \text{ s}. \tag{5}$$

On voit dans ce cas particulier que l'écho correspondant à l'obstacle le plus lointain arrive avant celui correspondant à l'obstacle plus proche.

Lors du traitement des échos reçus par le circuit de calcul, la mémoire de champ est explorée par des séries de droites dont l'inclinaison correspond aux différents angles d'émission. Lorsqu'une droite de lecture coïncide à une droite enregistrée, l'information correspondante est inscrite dans la mémoire image Mi. Les coordonnées du point inscrit dans la mémoire image varient donc en fonction de l'inclinaison de la droite, c'est-à-dire, de la direction de l'obstacle, et de la position de la droite dans la mémoire, corrigée du décalage temporel correspondant à l'instant d'émission dans cette direction:

La valeur d'un point P'r,$\theta$ correspondant à un point Pr,$\theta$ du milieu exploré est donc obtenue de la manière suivante:

$$P'r,\theta = \sum_{k=1}^{n} A_{k,l} \text{ avec } l = k \times \cos\theta + C \times \left(\frac{2r}{V_t} + \frac{\theta}{V_b}\right) \tag{6}$$

$A_{k,l}$ étant la valeur de l'échantillon stocké à la position 1 de la ligne $L_k$ de la mémoire de champ MC, et C étant une constante dépendant de la fréquence d'échantillonnage du convertisseur CAN.

Du fait que la relation entre 1 et k est simple, les adresses des échantillons stockés dans la mémoire de champ MC, à additionner pour obtenir la valeur d'un point dans la mémoire image Mi, peuvent être calculées au fur et à mesure de la constitution de l'image dans la mémoire Mi, en utilisant des tables de constantes donnant pour chaque angle θ de tir et chaque ligne $1_k$ de la mémoire de champ la valeur de $k \times \cos \theta$.

L'image contenue dans la mémoire image peut être affichée sous forme sectorielle (en coordonnées polaires : r,θ), ou subir un traitement de conversion pour être affichée en coordonnées cartésiennes.

L'invention permet également de résoudre les problèmes qui apparaissent dans le cas d'un sondage à courte distance (100 mm par exemple).

Lorsque la sonde est de dimension importante (barrette de 100 mm), le champ ultrasonore est très perturbé au voisinage de la surface émettrice et l'intensité moyenne est réduite, ce qui réduit la sensibilité de la détection. Ce phénomène peut être corrigé en appliquant une pondération d'amplitude sur les différents éléments, mais cette solution reste imparfaite.

Par ailleurs, lorsqu'un très grand nombre d'obstacles sont présents, par exemple dans le cas de l'échographie médicale, des artefacts peuvent apparaître sur l'image obtenue.

Une solution à ce problème consiste à réduire la surface émettrice par commutation des éléments de la sonde à l'émission, et en décalant la position de cette surface à chaque émission. On obtient ainsi l'équivalent d'un faisceau d'exploration mobile, mais la cadence d'acquisition est alors fortement diminuée. Cet inconvénient peut être atténué en émettant simultanément plusieurs faisceaux suffisamment espacés pour ne pas interférer entre eux, de façon par exemple à balayer tout l'objet en un nombre réduit d'émissions.

Par exemple, si l'on utilise un faisceau de 10 mm de large avec une sonde de 1000 mm de large, il faudra 20 tirs successifs d'un faisceau unique avec un recouvrement de 50% entre les faisceaux. Si l'on émet simultanément 5 faisceaux espacés de 20 mm, 4 tirs suffiront, mais la cadence de constitution des images est quand même divisée par 4.

La présente invention permet d'améliorer ce résultat. Pour cela, elle se base sur les observations suivantes.

En échographie médicale par exemple, la cadence des tirs peut être nettement supérieure à la cadence de traitement de l'image. Ainsi, lorsque l'on examine une structure jusqu'à 100 mm de profondeur, le temps maximum d'aller et de retour d'une impulsion est de $2 \times 0,1$ m / 1500 m/s, soit 0,13 ms. Dans le corps humain, l'absorption des ondes ultrasonores est très importante et la réverbération est pratiquement inexistante. Les tirs peuvent donc être effectués à la cadence de 5000 Hz, alors que la cadence de reconstitution de l'image ne peut dépasser 1000 Hz environ avec les techniques actuelles.

Il est donc possible, en utilisant une mémoire de champ MC de taille plus importante, d'enregistrer les échantillons obtenus à la suite de plusieurs tirs successifs (par exemple 4) dans une zone respective de cette mémoire, et d'effectuer ensuite le traitement. Chacune de ces zones de la mémoire de champ ne contient que les informations d'un quart de l'image à reconstituer. De ce fait, elles peuvent être traitées beaucoup plus rapidement (quatre fois plus pour 4 tirs successifs).

Dans cet exemple, un cycle d'acquisition et de traitement pourra être effectué en 2 ms, ce qui correspond à une cadence de 500 Hz qui est en général suffisante.

Cette cadence pourra toutefois être doublée en utilisant deux mémoires de champ MC ou une mémoire de champ de capacité double, de façon à pouvoir mémoriser les échantillons dans une mémoire ou dans une partie de cette mémoire, pendant que l'autre mémoire ou l'autre partie de cette mémoire est exploitée par les circuits de traitement.

## Revendications

**1.** Procédé pour le traitement de signaux représentatifs d'ondes réfléchies, transmises ou réfractées par un milieu (O), en vue d'effectuer une exploration et une analyse de la structure de ce milieu (O), ce procédé comprenant les étapes suivantes :

- l'émission d'au moins une onde incidente dans ladite structure,
- la réception des ondes provenant de la structure rencontrée par l'onde incidente à l'intérieur du milieu (O), par une pluralité d'éléments de détection ($D_1$ à $D_n$) indépendants les uns des autres,
- la mémorisation après numérisation des informations délivrées par les éléments de détection dans une mémoire de champ (MC) comprenant une ligne ($L_1$ à $L_n$) respective par élément de détection ($D_1$ à $D_n$), et
- la reconstitution et/ou l'analyse de la structure du milieu (O) à partir des informations lues dans la mémoire de champ (MC), dans laquelle sont calculées pour chaque point (Pij) de l'objet (O), les positions de la mémoire de champ contenant les signaux détectés par les éléments de détection ($D_1$ à $D_n$), correspondant aux ondes

réfléchies ou transmises par ce point (Pij), ces positions étant calculées à l'aide d'une loi d'adressage dont les paramètres dépendent de la position de ce point par rapport aux éléments de détection, et dans laquelle pour chaque point (Pij), les lignes ($L_1$ à $L_n$) de la mémoire de champ (MC) sont lues aux positions respectives calculées pour ce point (Pij), et une opération mathématique étant appliquée aux valeurs lues pour ce point en vue d'obtenir un résultat ($V_P$) représentatif de l'importance de l'onde provenant de ce point, ce résultat étant ensuite traité ou mémorisé dans une mémoire spécifique,

les positions de la mémoire de champ à lire pour chaque point (Pij) étant calculées au préalable et stockées dans une mémoire d'adressage (MA), tandis que lors du calcul de la valeur ($V_P$) pour chaque point (Pij), toutes les lignes ($L_1$ à $L_n$) de la mémoire de champ (MC) sont lues en parallèle pour chaque point (Pij) aux positions indiquées simultanément pour ce point par la mémoire d'adressage (MA),
caractérisé en ce que la valeur (Vp) est obtenue en multipliant le résultat de l'opération mathématique par un facteur de correction (K) variant en fonction du rapport (Nr/Nt) du nombre de valeurs (Nr) supérieures à un seuil prédéfini, lues dans la mémoire de champ pour un point, et du nombre total (Nt) de valeurs lues pour ce point.

2. Procédé selon la revendication 1,
caractérisé en ce que les valeurs (Vp) représentatives de l'importance des ondes provenant respectivement des points (Pij) sont mémorisées dans une mémoire imagé (Mi) comprenant une pluralité de points ($P_1'$ à $P_n'$) correspondant respectivement aux points (Pij).

3. Procédé selon la revendication 1,
caractérisé en ce que le facteur de correction (K) est nul lorsqu'il est inférieur à un certain seuil fonction du rapport (Nr/Nt) et vaut 1 lorsqu'il est supérieur à ce seuil.

4. Procédé selon la revendication 1,
caractérisé en ce que le facteur de correction (K) est proportionnel au rapport (Nr/Nt).

5. Procédé selon la revendication 1,
caractérisé en ce que le facteur de correction (K) varie d'une manière exponentielle en fonction du rapport (Nr/Nt).

6. Procédé selon l'une des revendications 2 à 5,
caractérisé en ce que plusieurs lois d'adressage de lecture sont associées à chaque point ($P_1$ à $P_n$) de la mémoire image.

7. Procédé selon l'une des revendications précédentes,
caractérisé en ce que les susdites ondes incidentes sont émises sous la forme d'impulsions.

8. Procédé selon l'une des revendications 1 à 6,
caractérisé en ce que les ondes incidentes sont émises sous la forme de trains d'ondes ou d'une émission continue, les lois d'adressage correspondant respectivement aux points (Pij) du milieu (O) étant alors choisies de façon à mettre en évidence les points réfléchissants situés à une distance prédéterminée des éléments de détection.

9. Procédé selon l'une des revendications précédentes,
caractérisé en ce que l'émission des ondes incidentes et la réception des ondes renvoyées par le milieu (O) s'effectuent par les mêmes moyens.

10. Procédé selon la revendication 8,
caractérisé en ce que l'émission des ondes incidentes et la réception des ondes renvoyées par le milieu (O) s'effectuent à l'aide de moyens distincts.

11. Procédé selon l'une des revendications précédentes,
caractérisé en ce que les fronts des ondes incidentes sont plans.

12. Procédé selon la revendication 1,
caractérisé en ce que les ondes incidentes sont composées de faisceaux directifs et/ou focalisés, ne se recouvrant pas, ces faisceaux étant déplacés au cours d'émissions successives de façon à couvrir toute la structure explorée.

13. Procédé selon la revendication 1,

caractérisé en ce que les susdites ondes incidentes sont engendrées à l'aide d'un réseau linéaire d'organes d'émission/réception indépendants.

**14.** Procédé selon la revendication 1,
caractérisé en ce que les ondes incidentes sont engendrées à l'aide d'organes d'émission/réception disposés selon une configuration matricielle.

**15.** Procédé selon la revendication 1,
caractérisé en ce que les ondes incidentes sont engendrées à l'aide d'organes d'émission/réception disposés aléatoirement.

**16.** Procédé selon l'une des revendications précédentes,
caractérisé en ce qu'il comprend l'émission successive d'ondes incidentes dans des directions différentes correspondant à des angles d'émission respectifs, à une cadence élevée indépendante du temps aller et retour d'une onde entre la sonde et la structure rencontrée par l'onde, chaque onde étant émise à un instant respectif variant en fonction de l'instant de son émission, chaque point $(Pij)$ du milieu $(O)$ susceptible d'être atteint par une impulsion correspondant à un ensemble distinct de positions dans la mémoire de champ $(MC)$, donnant la valeur $(Vp)$ représentant l'importance de l'onde provenant du point $(Pij)$.

**17.** Procédé selon l'une des revendications précédentes,
caractérisé en ce que la susdite loi d'adressage est une loi hyperbolique ou pseudo hyperbolique.

**18.** Procédé selon l'une des revendications 1 à 16,
caractérisé en ce que les ondes incidentes sont émises vers un obstacle situé à une distance très supérieure aux dimensions de l'ensemble des éléments de détection $(D_1$ à $D_n)$, de sorte que la susdite loi d'adressage peut être assimilée à une droite dont l'inclinaison dépend de la position angulaire de l'obstacle par rapport à l'ensemble des éléments de détection.

**19.** Procédé selon l'une des revendications précédentes,
caractérisé en ce que les éléments de détection $(D_1$ à $D_n)$ sont également émetteurs, le procédé comprenant la répartition des éléments $(D_1$ à $D_n)$ en groupes distincts qui sont activés à l'émission l'un après l'autre au cours d'un ensemble d'émissions successives, tous les éléments étant actifs en réception, les informations reçues par les éléments étant stockées dans des zones distinctes de la mémoire de champ $(MC)$.

**20.** Dispositif pour la mise en oeuvre du procédé selon l'une des revendications précédentes,
caractérisé en ce qu'il comprend une sonde $(1)$ composée d'une pluralité d'éléments émetteur/récepteur $(D_1$ à $D_n)$ reliés chacun, d'une part, à un émetteur $(E)$, par l'intermédiaire de deux diodes à seuil de conduction $(2, 3)$ montées tête-bêche et, d'autre part, à un convertisseur analogique/numérique $(CAN)$ dont la sortie est reliée à l'entrée d'écriture d'une mémoire de champ $(MC)$ dont la lecture est commandée par une mémoire d'adressage $(MA)$ pilotée par une horloge $(CK)$ via un compteur $(CR)$, la sortie de lecture des mémoires de champ $(MC)$ étant connectée à un additionneur $(S)$ dont la sortie est reliée via un moyen de correction à l'entrée d'écriture d'une mémoire image $(Mi)$ pilotée par le susdit compteur $(CR)$, le moyen de correction étant piloté par un dispositif de comptage du nombre $(Nr)$ de valeurs supérieures à un seuil prédéfini, lues dans la mémoire de champ et additionnées.

**21.** Dispositif selon la revendication 20,
caractérisé en ce que les éléments émetteurs/récepteurs $(D_1$ à $D_n)$ présentent des dimensions supérieures à la longueur d'onde émise et sont chacun munis d'un moyen pour augmenter leur angle d'ouverture.

**22.** Dispositif selon la revendication 21,
caractérisé en ce que les moyens pour augmenter l'angle d'ouverture des éléments émetteurs/récepteurs $(D_1$ à $D_n)$ sont constitués par des lentilles miniatures ou des calottes sphériques.

**23.** Dispositif selon la revendication 21 ou 22,
caractérisé en ce que les éléments émetteurs/récepteurs $(D_1$ à $D_n)$ sont disposés selon une configuration matricielle, les éléments récepteurs $(Di)$ présentant une répartition aléatoire dans cette configuration.

**24.** Dispositif selon l'une des revendications 21 à 23,
caractérisé en ce qu'il comprend deux zones de mémoire de champ $(MC)$ qui sont chargées et lues alternativement de manière à multiplier par deux la cadence de production d'images dans la mémoire image (Mi).

**Patentansprüche**

1. Verfahren für die Verarbeitung von Signalen, die reflektierten Wellen entsprechen, die von einem Milieu (O) übertragen oder gebrochen werden, um eine Erkundung und Analyse der Struktur dieses Milieus (O) vorzunehmen, wobei dieses Verfahren die folgenden Phasen beinhaltet:

   - Absendung von mindestens einer einfallenden Welle in die genannte Struktur,
   - Empfang der Wellen, die von der Struktur stammen, wie sie von der einfallenden Welle im Inneren des Milieus (O) angetroffen worden ist, anhand einer Vielzahl von Sensorelementen ($D_1$ bis $D_n$), die voneinander unabhängig sind,
   - Digitalisierung und Speicherung der Informationen, die von den Sensorelementen abgegeben werden, in einem Feldspeicher (MC), der eine Zeile ($L_1$ bis $L_n$) je Sensorelement ($D_1$ bis $D_n$) beinhaltet, und
   - Rekonstruktion und/oder Analyse der Struktur des Milieus (O) anhand der Informationen, die im Feldspeicher (MC) gelesen worden sind, in dem für jeden Punkt (Pij) des Objekts (O) die Positionen des Feldspeichers berechnet werden, die die Signale enthalten, die von den Sensorelementen ($D_1$ bis $D_n$) geortet worden sind, die den Wellen entsprechen, die von diesem Punkt (Pij) reflektiert oder übertragen worden sind, wobei diese Positionen mithilfe eines Adressierungsgesetzes berechnet werden, dessen Parameter von der Position dieses Punktes im Verhältnis zu den Sensorelementen abhängen, und in dem für jeden Punkt (Pij) die Zeilen ($L_1$ bis $L_n$) des Feldspeichers (MC) an den jeweiligen Positionen gelesen werden, die für diesen Punkt (Pij) berechnet worden sind, wobei auf die für diesen Punkt gelesenen Werte eine mathematische Operation angewendet wird, um ein Ergebnis ($V_p$) zu erhalten, das für den Umfang der Welle repräsentativ ist, die von diesem Punkt stammt, mit anschließender Verarbeitung oder Speicherung dieses Ergebnisses in einem speziellen Speicher,

   wobei die Positionen des Feldspeichers, die für jeden Punkt (Pij) gelesen werden müssen, vorab berechnet und in einem Adressierungsspeicher (MA) gespeichert werden, während anlässlich der Berechnung des Wertes ($V_p$) für jeden Punkt (Pij) alle Zeilen ($L_1$ bis $L_n$) des Feldspeichers (MC) parallel für jeden Punkt (Pij) an den Positionen gelesen werden, die simultan für diesen Punkt vom Adressierungsspeicher (MA) angegeben werden, dadurch gekennzeichnet, dass der Wert ($V_p$) durch Multiplikation des Ergebnisses der mathematischen Operation mit einem Korrekturfaktor (K) erhalten wird, der sich nach dem Verhältnis (Nr/Nt) zwischen der Anzahl von Werten (Nr), die über einem vorab festgelegten Schwellenwert liegen und im Feldspeicher für einen Punkt gelesen worden sind, und der Gesamtzahl (Nt) der für diesen Punkt gelesenen Werte, richtet.

2. Verfahren gemäß Patentanspruch 1, dadurch gekennzeichnet, dass die Werte ($V_p$), die für den Umfang der Wellen stehen, die jeweils von den Punkten (Pij) stammen, in einem Bildspeicher (Mi) gespeichert werden, der eine Vielzahl von Punkten ($P_1'$ bis $P_n'$) enthält, die jeweils den Punkten (Pij) entsprechen.

3. Verfahren gemäß Patentanspruch 1, dadurch gekennzeichnet, dass der Korrekturfaktor (K) gleich null ist, wenn er unterhalb eines bestimmten Schwellenwertes liegt, der sich nach dem Verhältnis (Nr/Nt) richtet und 1 beträgt, wenn er über diesem Schwellenwert liegt.

4. Verfahren gemäß Patentanspruch 1, dadurch gekennzeichnet, dass sich der Korrekturfaktor (K) proportional zum Verhältnis (Nr/Nt) richtet.

5. Verfahren gemäß Patentanspruch 1, dadurch gekennzeichnet, dass sich der Korrekturfaktor (K) exponentiell zum Verhältnis (Nr/Nt) verändert.

6. Verfahren gemäß einem der Patentansprüche 2 bis 5 dadurch gekennzeichnet, dass jedem Punkt ($P_1$ bis $P_n$) des Bildspeichers mehrere Adressierungsgesetze zugeordnet sind.

7. Verfahren gemäß einem der voranstehenden Patentansprüche, dadurch gekennzeichnet, dass die oben genannten einfallenden Wellen in Form von Impulsen ausgesendet werden.

**8.** Verfahren gemäß einem der Patentansprüche 1 bis 6,
dadurch gekennzeichnet, dass die einfallenden Wellen in Form von Wellenzügen oder einer dauernden Sendung ausgesendet werden, wobei die Adressierungsgesetze, die jeweils den Punkten (Pij) des Milieus (O) entsprechen, in der Weise gewählt werden, dass die reflektierenden Punkte aufgezeigt werden, die sich in einem vorgegebenen Abstand von den Sensorelementen befinden.

**9.** Verfahren gemäß einem der voranstehenden Patentansprüche,
dadurch gekennzeichnet, dass das Senden der einfallenden Wellen und der Empfang der vom Milieu (O) zurückgeschickten Wellen anhand derselben Mittel erfolgt.

**10.** Verfahren gemäß Patentanspruch 8,
dadurch gekennzeichnet, dass das Senden der einfallenden Wellen und der Empfang der vom Milieu (O) zurückgeschickten Wellen mithilfe von verschiedenen Mitteln erfolgt.

**11.** Verfahren gemäß einem der voranstehenden Patentansprüche,
dadurch gekennzeichnet, dass die Fronten der einfallenden Wellen plan sind.

**12.** Verfahren gemäß Patentanspruch 1,
dadurch gekennzeichnet, dass die einfallenden Wellen aus gerichteten und/oder fokalisierten Bündeln bestehen, die sich nicht gegenseitig überlagern, wobei diese Wellenbündel im Laufe aufeinanderfolgender Sendungen so angeordnet werden, dass die gesamte erkundete Struktur abgedeckt wird.

**13.** Verfahren gemäß Patentanspruch 1,
dadurch gekennzeichnet, dass die oben genannten einfallenden Wellen mithilfe eines linearen Netzes von unabhängigen Sende- und Empfangsorganen erzeugt werden.

**14.** Verfahren gemäß Patentanspruch 1,
dadurch gekennzeichnet, dass die einfallenden Wellen mithilfe von Sende- und Empfangsorganen erzeugt werden, die anhand einer Matrixkonfiguration angeordnet sind.

**15.** Verfahren gemäß Patentanspruch 1,
dadurch gekennzeichnet, dass die einfallenden Wellen mithilfe von zufällig angeordneten Sende- und Empfangsorganen erzeugt werden.

**16.** Verfahren gemäß einem der voranstehenden Patentansprüche,
dadurch gekennzeichnet, dass es das aufeinanderfolgende Senden von Wellen beinhaltet, die in unterschiedlichen Richtungen einfallen, die jeweiligen Sendewinkeln entsprechen, und dies mit einem hohen Takt, der unabhängig von der Zeit für den Hin- und Rückweg einer Welle zwischen der Sonde und der von der Welle angetroffenen Struktur ist, wobei jede Welle an einem jeweiligen Zeitpunkt ausgesendet wird, der sich nach dem Augenblick seiner Absendung richtet und jeder Punkt (Pij) des Milieus (O), der von einem Impuls getroffen werden kann, der einer separaten Reihe von Positionen im Feldspeicher (MC) entspricht, den Wert ($V_p$) angibt, der dem Umfang der Welle entspricht, die vom Punkt (Pij) stammt.

**17.** Verfahren gemäß einem der voranstehenden Patentansprüche,
dadurch gekennzeichnet, dass das oben genannte Adressierungsgesetz ein hyperbolisches oder pseudohyperbolisches Gesetz ist.

**18.** Verfahren gemäß einem der Patentansprüche 1 bis 16,
dadurch gekennzeichnet, dass die einfallenden Wellen in Richtung auf ein Hindernis ausgesendet werden, dass sich in einer Entfernung befindet, die weit größer ist als die Maße aller Sensorelemente ($D_1$ bis $D_n$), so dass das genannte Adressierungsgesetz einer Geraden assimiliert werden kann, deren Neigung von der Winkelposition des Hindernisses im Verhältnis zu sämtlichen Sensorelementen abhängt.

**19.** Verfahren gemäß einem der voranstehenden Patentansprüche,
dadurch gekennzeichnet, dass die Sensorelemente ($D_1$ bis $D_n$) ebenfalls Sender sind, wobei das Verfahren die Verteilung der Elemente ($D_1$ bis $D_n$) auf separate Gruppen beinhaltet, die nacheinander im Laufe einer Reihe von aufeinanderfolgenden Sendungen sendeaktiviert werden, wobei alle Elemente empfangsaktiv sind und die empfangenen Informationen in separaten Zonen des Feldspeichers (MC) gespeichert werden.

**20.** Vorrichtung für die Anwendung des Verfahrens gemäß einem der vorangegangenen Patentansprüche, dadurch gekennzeichnet, dass sie eine Sonde (1) beinhaltet, die aus einer Vielzahl von Sende/Empfangselementen ($D_1$ bis $D_n$) besteht, die jeweils zum einen über zwei über Kopf montierten Dioden mit Leitungsschwelle (2, 3) an einen Sender (E) und zum anderen an einen Analog-/Digitalwandler (CAN) angeschlossen sind, dessen Ausgang an den Schreibeingang eines Feldspeichers (MC) angeschlossen ist, dessen Lesen durch einen Adressierungsspeicher (MA) gesteuert wird, der durch einen Taktgeber (CK) über einen Zähler (CR) geregelt wird, wobei der Leseausgang der Feldspeicher (MC) an ein Addierglied (S) angeschlossen ist, dessen Ausgang über eine Korrektureinrichtung an einen Bildspeicher (Mi) angeschlossen ist, der vom oben genannten Zähler (CR) gesteuert wird, wobei die Korrektureinrichtung von einer Vorrichtung zum Zählen der Anzahl (Nr) der Werte gesteuert wird, die über einem vorgegebenen Schwellenwert liegen und im Feldspeicher gelesen und addiert werden.

**21.** Vorrichtung gemäß Patentanspruch 20, dadurch gekennzeichnet, dass die Sende- und Empfangselemente ($D_1$ bis $D_n$) Maße aufweisen, die über der ausgesendeten Wellenlänge liegen und jeweils mit einer Einrichtung ausgerüstet sind, um ihren Öffnungswinkel zu vergrößern.

**22.** Vorrichtung gemäß Patentanspruch 21, dadurch gekennzeichnet, dass die Mittel für die Vergrößerung des Öffnungswinkels der Sende- und Empfangselemente ($D_1$ bis $D_n$) aus Miniaturlinsen oder kugelförmigen Kalotten bestehen.

**23.** Vorrichtung gemäß Patentanspruch 21 oder 22, dadurch gekennzeichnet, dass die Sende- und Empfangselemente ($D_1$ bis $D_n$) anhand einer Matrixkonfiguration angeordnet sind und die Empfangselemente (Di) eine zufällige Verteilung innerhalb dieser Konfiguration aufweisen.

**24.** Vorrichtung gemäß Patentanspruch 21 bis 23, dadurch gekennzeichnet, dass sie zwei Feldspeicherzonen (MC) aufweist, die abwechselnd geladen und gelesen werden, um die Taktgeschwindigkeit zu verdoppeln, mit der die Bilder im Bildspeicher (Mi) erzeugt werden.

**Claims**

**1.** A method for the processing of signals representative of waves reflected, transmitted or refracted by an environment (O), with a view to exploring and analyzing the structure of said environment (O), said method comprising the following steps

- the transmission of at least one incident wave in said structure,
- the reception of the waves coming from the structure encountered by the incident wave inside the environment (O), by a plurality of detection elements ($D_1$ to $D_n$) independent of one another;
- the memorization after digitalization of the signals supplied by the detection elements, in a field memory (MC) comprising a respective line ($L_1$ to $L_n$) by detection element ($D_1$ to $D_n$), and
- the reconstitution and/or analysis of the structure of said environment (O) from the information read in the field memory (MC), in which are computed of each point (Pij) for the environment (O), the positions of the field memory containing the detected signals by the detection elements ($D_1$ to $D_n$) corresponding to the reflected or transmitted waves by this point (Pij), said positions being computed by the way of an addressing law, the parameters of which depend on the position of this point with regard to the detection means, and in which for each point (Pij), the lines ($L_1$ to $L_n$) of the field memory (MC) are read to the respective positions computed for this point (Pij), and a mathematical operation being applied to the read values for this point with a view to obtaining a result ($V_p$) representative of the importance of the wave originating in this point, after this result being processed or memorized in a specific memory,

the positions of the memory field to read for each point (Pij) being preliminary computed and stored in an addressing memory (MA), while when the computing of the value ($V_p$) for each point (Pij), all the lines ($L_1$ to $L_n$) of the field memory (MC) are simultaneously read in parallel for each point (Pij) to the indicated positions for this point by the addressing memory (MA), characterised in that the value ($V_p$) is obtained by multiplicating the result of the mathematical operation by the correction factor (K) variable in accordance with the ratio (Nr/Nt) of the number of the values (Nr) above a predefined threshold, read in the field memory for each point, and of the total number (Nt) of the read values for this point.

**2.** The method according to claim 1,
characterized in that the values ($V_p$) representative of the importance of the waves respectively originating of the points (Pij) are memorized in a image memory (Mi) comprising a plurality of points ($P_1$, to $P_{n'}$) corresponding respectively to the points (Pij).

**3.** The method according to claim 1,
characterized in that the correction factor (K) is nil when below a certain threshold as a function of the ratio (Nr/Nt) and has a value of 1 when it is above said threshold.

**4.** The method according to claim 3,
characterized in that the correction factor (K) is proportional to the ratio (Nr/Nt).

**5.** The method according to claim 1,
characterised in that the correction factor (K) varies exponentially as a function of the ratio (Nr/Nt).

**6.** The method according to one of the claims 2 to 5,
characterised in that several read addressing laws are associated with each point ($P_1$ to $P_n$) of the image memory.

**7.** The method according to one of the preceding claims,
characterised in that said incident waves are emitted in the form of pulses.

**8.** The method according to one of the preceding claims 1 to 6,
characterised in that the incident waves are emitted in the form of wave trains or of a continuous transmission, the addressing law corresponding respectively to the points (Pij) of the environment (O) then being chosen so as to show up the reflecting points situated at a predetermined distance.

**9.** The method according to one of the preceding claims,
characterised in that the emission of the incident waves and the reception of the waves reverberated by the environment (O) are performed by the same means.

**10.** The method according to claim 8,
characterised in that the emission of the incident waves and the reception of the waves reverberated by the environment (O) are performed by separate means.

**11.** The method according to one of the preceding claims,
characterised in that the edges of the incident waves are plane.

**12.** The method according to claim 1,
characterised in that the incident waves are composed of directional and/or focused beams which do not overlap, said beams being moved in the course of successive emissions in order to cover the entire structure.

**13.** The method according to claim 1,
characterised in that said incident waves are generated by means of a linear network of independent transmission / reception units.

**14.** The method according to claim 1,
characterised in that said incident waves are generated by means of transmission / reception units arranged according to a matrix configuration.

**15.** The method according to claim 1,
characterised in that said incident waves are generated by transmission/reception units arranged randomly.

**16.** The method according to claim 1,
characterised in that it comprises the successive transmission of incident waves in different directions corresponding to respective angles of transmission, at a high rate independent of the duration of the outward and return journey of a wave between the probe and the structure encountered by the wave, each wave being emitted at a respective instant varying as a function of the instant of its transmission, each point (Pij) of the environment (O) susceptible of being hit by a pulse corresponding to a separate set of positions in the field memory (MC) giving

the value ($V_p$) representing the importance of the wave coming from said point (Pij).

17. The method according to claim 1,
    characterised in that the said addressing law is a hyperbolic or pseudo-hyperbolic law.

18. The method according to claim 1 to 16, wherein the incident waves are emitted towards an obstacle situated at a distance far greater than the dimensions of the set of detection elements ($D_1$ to $D_n$), so that said addressing law can be assimilated with a straight line of which the slope depends on the angular position of the obstacle in relation to the set of detection elements.

19. The method as claimed in claim 1,
    wherein the detection elements ($D_1$ to $D_n$) are also emitters, the method comprising the distribution of said elements ($D_1$ to $D_n$) into separate groups which are activated for transmission one after the other during a set of successive transmissions, all the elements being active for reception, the information received by the elements being stored in separate zones of the field memory (MC).

20. A device to implement the method according to one of the preceding claims,
    characterised in that it comprises a probe (1) composed of a plurality of transmission/reception units ($D_1$ to $D_n$) each connected, on the one band, to a transmitter (E), via two conduction threshold diodes (2, 3) mounted bead-to-foot, and, on the other band, to an analog-to-digital converter (CAN) of which the output is connected to the write input of a field memory (MC) in which reading is controlled by an addressing memory (MA) driven by a clock (CK) via a counter (CR), the read output of the field memories (MC) being connected to an adder (S) of which the output is connected, via a correction means, to the write input of an image memory (Mi) driven by said counter (CR), the correction means being driven by a device for counting the number (Nr) of values above a predetermined threshold, read in the field memory and added together.

21. The device according to claim 20,
    characterised in that the transmission/reception units ($D_1$ to $D_n$) are of dimensions in excess the length of the wave emitted and are each fitted with a means for increasing their aperture.

22. The device according to claim 21,
    characterised in that the means are for increasing the aperture of the transmission/reception units ($D_1$ to $D_n$) is comprised of miniature lenses or spherical caps.

23. The device according to claim 21 or 22,
    characterised in that the transmission/reception units ($D_1$ to $D_n$) are arranged according to a matrix configuration, the reception units (Di) being distributed randomly within this configuration.

24. The device according to claims 22, to 23,
    characterised in that it comprises two field memory (MC) zones which are alternately written in and read so as to double the rate of production of images in the image memory (Mi).

Fig.1

# Fig.2

Fig.3

Fig.4

Fig.5

Fig.6

Fig.7

Fig.9

Fig.8a

Fig.8b